Europäisches Patentamt

European Patent Office

Office européen des brevets

(11) Veröffentlichungsnummer : **0 071 133**
**B1**

# (12) EUROPÄISCHE PATENTSCHRIFT

(45) Veröffentlichungstag der Patentschrift :
10.09.86

(51) Int. Cl.⁴ : **C 01 B 17/46**

(21) Anmeldenummer : **82106469.8**

(22) Anmeldetag : **19.07.82**

(54) Verfahren zur Herstellung von Chlorsulfonsäure.

(30) Priorität : 29.07.81 DE 3129976

(43) Veröffentlichungstag der Anmeldung :
09.02.83 Patentblatt 83/06

(45) Bekanntmachung des Hinweises auf die Patenterteilung : 10.09.86 Patentblatt 86/37

(84) Benannte Vertragsstaaten :
BE DE FR GB NL

(56) Entgegenhaltungen :
US-A- 1 422 335

(73) Patentinhaber : BAYER AG
Konzernverwaltung RP Patentabteilung
D-5090 Leverkusen 1 Bayerwerk (DE)

(72) Erfinder : Schultz, Karl-Heinz, Dr.
Deswatinesstrasse 61
D-4150 Krefeld (DE)
Erfinder : Baunack, Fritz, Dr.
Hebbelstrasse 5
D-5090 Leverkusen 1 (DE)

## Beschreibung

Die vorliegende Erfindung betrifft ein Verfahren zur Herstellung von Chlorsulfonsäure aus gasförmigem Schwefeltrioxid und Chlorwasserstoff unter vermindertem Druck.

Die Herstellung von Chlorsulfonsäure durch Reaktion von Chlorwasserstoffgas mit Schwefeltrioxidgas unter anschließender Kühlung und Absorption ist bekannt. Es ist ferner Stand der Technik, anstelle von reinem $SO_3$ Kontaktgas mit einem Gehalt von 7 bis 8 % Schwefeltrioxid zu verwenden. Seit der Umstellung der Schwefelsäurefabrikation auf das Doppelkontaktverfahren wird diese Herstellungsform jedoch nicht mehr durchgeführt.

Die Herstellung von Chlorsulfonsäure unter vermindertem Druck ist aus der US-A-1 422 335 bekannt.

Überraschenderweise wurde nun jedoch gefunden, daß es möglich ist, bei der Herstellung von Chlorsulfonsäure unter vermindertem Druck auch ein niederprozentiges Oleum als $SO_3$-Quelle einsetzen zu können. Die bei der Reaktion von $SO_3$ mit HCl anfallende Reaktionswärme reicht nämlich aus, um auch aus niederprozentigem Oleum $SO_3$ in ausreichender für die Reaktion benötigter Menge auszutreiben.

Gegenstand der vorliegenden Erfindung ist daher ein Verfahren zur Herstellung von Chlorsulfonsäure durch Reaktion von Chlorwasserstoff mit Schwefeltrioxid in gasförmiger Form unter vermindertem Druck, welches dadurch gekennzeichnet ist, daß die bei der Reaktion anfallende Wärme zumindest zum Teil zum Austreiben des zur Reaktion benötigten Schwefeltrioxids aus niederprozentigem Oleum, dessen Gehalt an freiem Schwefeltrioxid ca. 25 bis 35 Gew.-% beträgt, eingesetzt wird.

Bei dem erfindungsgemäßen Verfahren wird sowohl der Chlorwasserstoff als auch das Schwefeltrioxid in gasförmiger Form zur Reaktion gebracht. Vorzugsweise werden die beiden Stoffe unter einem Druck von 100 bis 800 mbar, besonders bevorzugt von 400 bis 500 mbar und ganz besonders bevorzugt von 430 bis 470 mbar, zusammengeführt. Bei dieser Reaktion wird Wärme freigesetzt. Diese Wärme wird erfindungsgemäß dazu benutzt, um das zur Reaktion mit Chlorwasserstoff benötigte Schwefeltrioxidgas aus niederprozentigem Oleum auszutreiben. Bisher konnte niederprozentiges Oleum nicht in technisch sinnvoller Weise als $SO_3$-Quelle bei der Herstellung von Chlorsulfonsäure eingesetzt werden. Aufgrund des erfindungsgemäßen Verfahrens ist es nun jedoch möglich, niederprozentiges Oleum, d. h. Oleum mit einem Anteil an freiem $SO_3$ von ca. 25 bis 35 Gew.-%, vorzugsweise 28 bis 32 Gew.-%, einzusetzen. Bei Durchführung der Reaktion von $SO_3$ mit HCl bei einem Druck von ca. 450 mbar kann z. B. Oleum mit 30 Gew.-% freiem $SO_3$ auf einer Temperatur von ca. 126 °C gehalten werden. In Abhängigkeit des Reaktionsdruckes und der Konzentration des Oleums kann die Temperatur des Oleums eingestellt werden. Bei den angegebenen, erfindungsgemäßen Bedingungen liegt die Temperatur des Oleums zwischen ca. 80 °C bis 140 °C, vorzugsweise zwischen 100 °C und 130 °C bei Verwendung von Oleum mit einem Gehalt von ca. 30 Gew.-% freiem $SO_3$.

Üblicherweise wird Chlorsulfonsäure unter Einsatz eines geringen HCl-Überschusses hergestellt. Dieser geringe Überschuß wird vorzugsweise auch bei dem vorliegenden Verfahren eingestellt. Es ist allerdings auch möglich, das vorliegende Verfahren mit einem Unterschuß an HCl, z. B. bis zu 2 % — bezogen auf eine stöchiometrische Umsetzung — durchzuführen. Bei der Erzeugung des Unterdruckes ist daher zu berücksichtigen, daß bei der vorzugsweisen Verfahrensdurchführung der HCl-Überschuß in die Pumpanlage gelangen und dort zu Korrosionen Anlaß geben kann. Bei dem erfindungsgemäßen Verfahren wurde daher ein Glasinjektor eingesetzt, der mit Chlorsulfonsäure unter einem Überdruck betrieben wurde. Vorzugsweise wurde hier ein Überdruck von 2,5 bis 3,5 bar eingestellt. Das mit einem Chlorsulfonsäureüberdruck von 2,5 bar erzeugte Vakuum betrug bei Verwendung des vorgenannten Injektors ca. 120 mbar. Chlorwasserstoffgas-Überschuß wird im Glasinjektor durch die Chlorsulfonsäure absorbiert und auf diese Weise unschädlich gemacht.

Das vorliegende Verfahren soll durch das folgende Beispiel noch näher erläutert werden :

### Beispiel

In der Reaktionsapparatur wurde ein Druck von 450 mbar mittels eines mit Chlorsulfonsäure betriebenen Glasinjektors eingestellt und das als $SO_3$-Quelle verwendete Oleum mit einem Gehalt von ca. 30 Gew.-% freiem $SO_3$ auf einer Temperatur von ca. 125 °C gehalten. Hierbei wurde das $SO_3$-Gas ausgetrieben und Oleum mit ca. 13,3 Gew.-% freiem $SO_3$ lief ab. Das $SO_3$-Gas wurde in einem Strahlkondensator mit der äquivalenten Menge eines HCl-Gasstromes zu Chlorsulfonsäure umgesetzt. Der verwendete Injektor ist in seiner Arbeitsweise mit einem Wasserdampfstrahler zu vergleichen. Der Druck im Oleumverdampfer lag bei 260 mbar. Durch die Kühlung fiel die Chlorsulfonsäure in flüssiger Form an. Die ablaufende Chlorsulfonsäure wies noch eine Temperatur von ca. 125 °C auf und wurde durch Wärmeaustausch mit dem einzusetzenden Oleum bis auf 95 °C und anschließend mit Wasser bis auf ca. 40 °C abgekühlt. Die in der Reaktion von $SO_3$ mit HCl freiwerdende Wärme wurde zur Austreibung des benötigten Schwefeltrioxids aus dem Oleum verwendet. Aus ca. 660 ml Oleum mit ca. 30 Gew.-% $SO_3$ (55 °C) und ca. 300 l HCl von ca. 260 mbar wurden ca. 353 g Chlorsulfonsäure gewonnen. Ca. 1 020 g Oleum mit 13,3 % freiem $SO_3$ liefen ab. Eine Analyse des entstandenen Produktes ergab einen Chlorsulfonsäuregehalt von über 98,5 %.

**Patentansprüche**

1. Verfahren zur Herstellung von Chlorsulfonsäure durch Reaktion von Chlorwasserstoff mit Schwefeltrioxid in gasförmiger Form unter vermindertem Druck, dadurch gekennzeichnet, daß die bei der Reaktion anfallende Wärme zumindest zum Teil zum Austreiben des zur Reaktion benötigten Schwefeltrioxids aus niederprozentigem Oleum, dessen Gehalt an freiem Schwefeltrioxid 25 bis 35 Gew.-% beträgt, eingesetzt wird.

2. Verfahren nach Anspruch 1, dadurch gekennzeichnet, daß Schwefeltrioxid und Chlorwasserstoff bei einem Druck von 100 bis 800 mbar, vorzugsweise 400 bis 500 mbar, zusammengeführt werden.

3. Verfahren nach Anspruch 1 oder 2, dadurch gekennzeichnet, daß das niederprozentige Oleum auf Temperaturen zwischen 80 bis 140 °C gehalten wird.

**Claims**

1. Process for the preparation of chlorosulphonic acid by reacting hydrogen chloride with sulphur trioxide in gaseous form under reduced pressure, characterised in that the heat produced during the reaction is used at least in part for expelling the sulphur trioxide required for the reaction from low percentage oleum which has a content of free sulphur trioxide of 25 to 35 % by weight.

2. Process according to Claim 1, characterised in that sulphur trioxide and hydrogen chloride are brought together at a pressure of 100 to 800 mbar, preferably 400 to 500 mbar.

3. Process according to Claim 1 or 2, characterised in that the low percentage oleum is kept at temperatures between 80 and 140 °C.

**Revendications**

1. Procédé de préparation de l'acide chlorosulfonique par réaction du chlorure d'hydrogène avec l'anhydride sulfurique à l'état gazeux sous une pression inférieure à la pression normale, caractérisé en ce que la chaleur dégagée dans la réaction est utilisée en partie au moins pour expulser l'anhydride sulfurique nécessaire pour la réaction d'un oléum à basse concentration dont la teneur en anhydride sulfurique libre est de 25 à 35 % en poids.

2. Procédé selon la revendication 1, caractérisé en ce que l'on met l'anhydride sulfurique et le chlorure d'hydrogène en contact sous une pression de 100 à 800 mbar, de préférence de 400 à 500 mbar.

3. Procédé selon la revendication 1 ou 2, caractérisé en ce que l'oléum à basse concentration est maintenu à des températures de 80 à 140 °C.